(19) **Europäisches Patentamt / European Patent Office / Office européen des brevets**

(11) **EP 4 756 490 A1**

(12) ## EUROPEAN PATENT APPLICATION

(43) Date of publication:
**10.06.2026 Bulletin 2026/24**

(21) Application number: **24218187.3**

(22) Date of filing: **06.12.2024**

(51) International Patent Classification (IPC):
*G01S 13/937* (2020.01)   *G01S 7/00* (2006.01)
*G01S 13/86* (2006.01)   *G01S 13/95* (2006.01)
*G01S 17/86* (2020.01)   *G01S 17/88* (2006.01)
*G01S 17/95* (2006.01)   *G01S 17/93* (2020.01)
*G01S 15/93* (2020.01)   *G01S 15/88* (2006.01)
*G01S 15/86* (2020.01)

(52) Cooperative Patent Classification (CPC):
**G01S 17/86; G01S 7/006; G01S 13/862;**
**G01S 13/865; G01S 13/867; G01S 13/937;**
**G01S 13/956; G01S 15/93; G01S 17/93;**
**G01S 17/95;** G01S 13/917; G01S 15/86;
G01S 15/885; G01S 17/88

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **FNV IP B.V.**
**2264 SG Leidschendam (NL)**

(72) Inventors:
  • **Lafontaine, Stijn Cornée**
    **2264 SG Leidschendam (NL)**

  • **Hendrix, Julius Louis Anselmus Maria**
    **2264 SG Leidschendam (NL)**
  • **Laporte, Jonathan René Janick**
    **2264 SG Leidschendam (NL)**
  • **Dias Bispo Carvalho, Diego**
    **2264 SG Leidschendam (NL)**
  • **Brekelmans, Christiaan Theodorus Wijnand**
    **2264 SG Leidschendam (NL)**

(74) Representative: **FNV Intellectual Property
Prismastraat 3
2631 RT Nootdorp (NL)**

(54) **DEVICES AND METHODS FOR DETECTING OBJECTS PROXIMAL TO AN UNCREWED MARINE VEHICLE**

(57)    The present invention relates to methods and devices for detecting objects proximal to an uncrewed marine vehicle (UMV). The UMV comprises a first sensor having a first sensing modality and a second sensor having a second sensing modality. The method comprises acquiring a first and second sets of object data from the first and second sensors respectively, acquiring environmental status information, determining confidence scores of the object data based on the environmental status information, determining a presence of one or more objects while applying the confidence scores as weighting factors for determining at least one property of said one or more objects. Unlocking insights from Geo-Data, the present invention further relates to improvements in sustainability and environmental developments: together we create a safe and liveable world.

EP 4 756 490 A1

**Description**

FIELD OF THE INVENTION

The present disclosure generally relates to the field of uncrewed marine vehicles (UMVs). Examples of UMVs are uncrewed surface vessels (USVs) and remotely operated vehicles (ROVs). These vehicles are used for various maritime applications, including subsea geo-data surveying, environment monitoring, maritime facility, and subsea infrastructure maintenance. USVs operate on the surface of a body of water, while ROVs may more typically be deployed for either water-surface or underwater operations, most typically underwater operations. Unlocking insights from Geo-Data, the present invention further relates to improvements in sustainability and environmental developments: together we create a safe and liveable world.

BACKGROUND OF THE INVENTION

UMVs are configured to be operable without any human crew onboard. They may be remotely operated or controlled from a remote base station on land (e.g., a remote operating centre), at sea or in the air; configured to operate autonomously, for example to autonomously navigate at sea on the surface and/or sub-sea; or operate under a combination of autonomous control and remote control. When operating autonomously, the UMVs may advantageously operate independently or with minimal (remote) human intervention.

One of the advantages of UMVs is their ability to operate in harsh and hazardous environments where a human presence is not ideal or not possible. This capability is particularly valuable for tasks such as deep-sea survey, environmental monitoring and underwater infrastructure inspection in extreme conditions. Furthermore, remote operations in marine environments are particularly advantageous because it reduces exposure of human staff to hazardous maritime surroundings. In addition, without staff on board, the size and weight of the vessel can be dramatically reduced, which leads to much more efficient operations, with reduced emissions. Remote operations thus increase safety and reduce environmental impact.

Enhancing the autonomy of UMVs may be desirable for several reasons. When human intervention is minimized, the autonomy can lead to increased productivity, reduced operational costs, and/or extended operation periods. Therefore, it is desirable to improve the ability of UMVs to operate autonomously. This may further reduce needs for base station intervention, such as by remote control, and needs for base stations to remain in constant contact with UMVs, for example reducing needs for deployment and/or presence of mother vessels or aircraft for remote control, instruction or monitoring of UMVs.

Advanced autonomy is desired for the UMVs. However, for safety reasons, an option for human intervention to take-over the control of the UMVs is usually implemented for safety reasons.

A challenge in the operation of uncrewed marine vehicle operations is the reliable detection of objects and obstacles in the maritime environment. The reliability of a sensor depends heavily on the environmental conditions under which it is operating. In marine environments, weather and water conditions can greatly affect the performance of sensors. For instance, some sensors may operate effectively under certain weather conditions, while others may not. The performance of a sensor can vary based on factors such as brightness, glare, water clarity, humidity, mist, temperature, and wave height.

As these environmental conditions change, the reliability of the sensor data also changes. One sensor might become less reliable in certain conditions, while another might become more accurate. This variability in sensor performance can lead to misdetections and/or misidentifications of objects and obstacles, posing a risk to the safe navigation of USVs and ROVs.

The reliability and functionality of sensors are particularly important for UMVs because UMVs are solely relying on these sensors for the detection and awareness of safety hazards. If sensors fail or become unreliable, the UMVs cannot accurately detect and respond to potential dangers, which compromises the safety and effectiveness of its operations. This challenge is particularly significant for uncrewed marine vessels, as they operate without humans onboard and rely entirely on their sensors to navigate and perform tasks. Therefore, ensuring that sensors are always operational is of utmost importance to maintain the safety and efficiency of UMVs. Therefore, there is a need to ensure the reliable detection of nearby objects for UMVs.

BRIEF SUMMARY OF THE INVENTION

In the present invention it has been identified that object detection may be improved through dynamic assessment and adjustment of the reliability of sensor data accounting for environmental conditions. By weighting data from various sensors in accordance with a data reliability index, the most reliable sensor data may be used for object detection, with optional auxiliary use of data having a lower data reliability index. In this manner, uncrewed marine vehicles may more accurately detect the current state of the navigation environment, regardless of dynamic environmental conditions.

Addressing this need may assist in enhancing the autonomy, safety, and efficiency of USV and ROV operations in maritime environments. By taking into account the impact of environmental conditions, such as weather and water conditions, on sensor reliability, the system may improve the accuracy and reliability of object detection, ensuring safe and effective navigation, and/or allow operation in heretofore non-operational (weather) conditions.

In a first aspect, the invention provides a method for detecting objects proximal to an uncrewed marine vehicle (UMV). The UMV comprises a first environmental sensor having a first sensing modality and a second environmental sensor having a second sensing modality. The method comprises the steps of acquiring a first set of object data from the first sensor, acquiring a second set of object data from the second sensor, and acquiring environmental status information, preferably weather information indicative of current weather conditions, solar illumination status, swell, wave motion, any combination thereof, or all thereof. The method further includes determining a first confidence score for the first set of object data based on the environmental status information, determining a second confidence score for the second set of object data based on the environmental status information, and detecting the presence of one or more objects from the first and second object data sets, wherein the first and second confidence scores are applied as weighting factors when determining at least one property of said one or more objects. A UMV can be a USV at the sea surface or an ROV operable underwater.

Different sensors have varying levels of effectiveness under different environmental conditions. For example, an RGB camera, which relies on visible light, may not be effective in low-light or nighttime conditions. In such situation, a LiDAR sensor, which uses laser light to measure distances, or an infrared camera, which detects thermal radiation, can (still) provide (more) reliable data. Similarly, during foggy or rainy weather, optical cameras may struggle to capture clear images, whereas other sensors can (still) detect objects (more) effectively. In bright, sunny conditions, a polarized camera may be used to reduce glare from the water surface, making it more useful than normal unpolarized cameras. By leveraging the strengths of different sensors under varying conditions, the UMV can maintain accurate and reliable object detection, assisting in ensuring safe and efficient navigation.

This method may enhance the reliability and accuracy of object detection by dynamically adjusting the confidence scores of sensor data based on environmental conditions. By weighting data from various sensors according to their reliability under current, expected, varying or predicted conditions, the method ensures that the most reliable data is used for object detection, thereby improving the safety and efficiency of UMV operations.

The at least one property of the objects can include size, shape, position, orientation, velocity, acceleration, reflectivity, transparency/opacity, pattern or markings, material type, density, thermal properties, or any property which can identify the status or identity of the obj ect.

In embodiments, the environmental status information can be obtained from one or more weather sensors, preferably onboard weather sensors. Alternatively, the weather status information can be obtained from an external source via a wireless communication, for example from a land-based control centre, other vessels, satellite communication channel, or any other means suitable for providing weather status information to the UMV.

When determining at least one property of said one or more objects, an object-detection algorithm is used. By providing the confidence scores together with the sets of object data, the algorithm can use those scores as weighting factors, in other words it is assessed which data is more or most reliable or trustworthy, for determining at least one property of the object, for example, its position and velocity. By dynamically adjusting/updating the confidence scores based on the changing environment, the UMV can effectively utilize different sensors with different sensing modalities tailored to the environmental conditions.

In embodiments, the method may further comprise steps of (i) acquiring one or more further sets of object data from one or more additional sensors that the UMV comprises, the one or more additional sensors having sensing modalities different from the first and second sensors, preferably each sensor having a respective sensing modality distinct from the other sensors; (ii) determining confidence scores for each additional set of data based on the set of environmental status information, and (iii) detecting of the presence of the one or more objects from the one or more additional sensor data sets, while also applying the additional confidence scores as weighting factors when determining at least one property of said one or more objects. This way, it is possible to leverage data from multiple sensors to enhance object detection accuracy under varying environmental conditions and add additional safety layers in case of malfunctioning of any of the sensors.

In embodiments, the determining of confidence scores may comprise using a lookup table correlating environmental status information, preferably weather conditions, to confidence scores of sensing modalities. This allows for a systematic and efficient way to adjust confidence scores based on predefined correlations, enhancing the method's adaptability to different environmental conditions. The lookup table can be revised, updated to reflect the conditions of the sensors.

In embodiments, the UMV may comprise one or more of the following sensors: at least one optical camera, at least one infrared camera, at least one radar sensor, at least one lidar sensor, at least one polarized camera, at least one ultraviolet sensor, at least one acoustic sensor, at least one sonar sensor, at least one stereoscopy, and at least one ultrasound sensor. These sensors provide comprehensive data about the surrounding environment, enabling accurate object detection and enhancing the UMV's situational awareness.

In embodiments, the environmental status information may comprise weather information, preferably including one or more of the following: wave height, wind speed, wind direction, visibility, precipitation, temperature, humidity, UV intensity, time, fogginess, light level, tide, and any other environmental factor that can affect sensor accuracy and/or the navigation of the UMV. This detailed environmental data allows for adjustments to confidence scores based on comprehensive environmental status, enhancing the reliability of object detection.

In embodiments, determining the confidence scores may comprise applying a machine learning algorithm to calculate the confidence scores. Such algorithm can be pre-trained to calculate confidence scores based on various types of object data collected from different sensing modalities.

In embodiments, the method may comprise updating one or more confidence scores based on changes in weather conditions in real-time and may further comprise repeating the detecting step using the updated confidence scores. This ensures that the object detection process is continuously optimized based on the latest environmental data, enhancing the UMV's ability to navigate safely and efficiently.

In embodiments, the UMV may further comprise a control unit for navigation and motion control of the UMV, and the method further comprises providing detected object information to the control unit of the UMV, and the control unit navigating the UMV based on the detected object information. This integration allows the UMV to make informed navigation decisions based on reliable object detection data, improving the safety and efficiency of its operations.

In embodiments, the method may further comprise navigating the UMV to avoid collision with a detected object. This ensures safe and efficient navigation in dynamic maritime environments while preventing collisions. In embodiments, the UMV can also approach a detected object if it needs to carry out any task near the target object. This enhances the UMV's operational effectiveness.

In embodiments, the UMV is a USV, and preferably the first and second sensors are arranged to sense data relating to surface obstacles and/or surface traffic. This configuration is particularly useful for surface navigation and collision avoidance, improving the UMV's ability to operate safely at the sea surface.

In embodiments, the UMV is an ROV, and preferably the first and second sensors are arranged to sense data relating to submerged objects. This configuration is particularly useful for underwater navigation and object detection, enhancing the ROV's ability to perform tasks such as subsea geo-data surveying and infrastructure maintenance.

In a second aspect, the invention provides a non-transitory computer-readable medium storing instructions which, when executed by one or more processors, cause the one or more processors to perform operations comprising the steps of the method described above relating to the first aspect. This second aspect may allow the method to be implemented in a variety of computing hardware environments.

In a third aspect, the invention provides a UMV comprising a memory, a first sensor having a first sensing modality configured to acquire a first set of environmental data, a second sensor having a second sensing modality configured to acquire a second set of environmental data, an environmental information unit, preferably weather information unit, configured to acquire environmental, preferably weather, condition information, and a processing unit configured to determine a first confidence score for the first set of data based on the environmental condition information, determine a second confidence score for the second set of data based on the environmental condition information, and provide the first and second sets of data of the object, and the first and second confidence scores to an object-detection module. The object-detection module is configured to detect one or more objects from the first and second data sets based on the confidence scores as weighting factors for determining at least one property of the one or more objects.

The environmental information unit can acquire environmental, preferably weather, condition information from an external source via a wireless communication. Alternatively, the environmental condition information can be obtained from one or more weather sensors. The environmental, preferably weather, sensor can be any sensor known in the art for collecting weather-related information such as wave height, wind speed, wind direction, visibility, precipitation, temperature, humidity, UV intensity, time, fogginess, light level, tide, and any other environmental factor that can affect the navigation of the UMV.

A confidence score represents quantified level of reliability of a sensor. It relates to accuracy and trustworthiness of the sensor data under specific environmental conditions. A higher confidence score indicates more trustworthy sensor data.

In embodiments, the memory of the UMV may further comprise a lookup table correlating environmental, preferably weather, condition information to confidence scores of sensing modalities. The lookup table may be updated regularly.

In embodiments, the processing unit may further be configured to update one or more confidence scores based on changes in environmental, preferably weather, conditions in real-time. The environmental condition information can be periodically obtained by the environmental information unit. This ensures that the object detection process is continuously optimized based on the latest environmental data, enhancing the UMV's ability to navigate safely and efficiently.

In embodiments, the UMV may further comprise a control unit configured to navigate the UMV based on the detected object information. This integration allows the UMV to make informed navigation decisions based on reliable object detection data, improving the safety and efficiency of its operations. The control unit may be arranged to determine a navigational course for the UMV, such as navigation from one waypoint or GPS coordinate to another waypoint of GPS coordinate, or such as navigation to remain at or within a determined range of a given coordinate e.g. despite winds and currents.

The control unit may be arranged instruct motion devices, such as thruster or propellers, to move the UMV along a determined course. The control unit may alter e.g. change or abandon the determined navigational course based on the detected object information e.g. to avoid collision such as based on accepted marine rules; and/or instruct one or more communication devices (preferably onboard) to issue communication signals or warning signals, such as radio, visual, and/or acoustic signals as may be typical for marine traffic e.g. when communicating right of way. The control unit may be arranged to select one, more or all communication or warning signals based on the environmental condition data, e.g. a foghorn during low-visibility.

BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are therefore not to be considered limiting of its scope, the principles herein are described and explained with additional specificity and detail through the use of the accompanying drawings in which:

FIG. 1 is a schematic view of a USV connected to an ROV deployed underwater.
FIG. 2 is a flow chart of a method for detecting objects proximal to a UMV.
FIG. 3 is a schematic view illustrating various types of environmental/weather status information.
FIG. 4 is a diagram illustrating an exemplary arrangement of a UMV.

DESCRIPTION OF ILLUSTRATIVE EMBODIMENTS

The following is a description of certain embodiments of the invention, given by way of example only and with reference to the drawings.

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. A reference to an embodiment in the present disclosure can be a reference to the same embodiment or any other embodiment. Such references thus relate to at least one of the embodiments herein.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any example term. Likewise, the disclosure is not limited to various embodiments given in this specification.

Without intent to limit the scope of the disclosure, examples of instruments, apparatus, methods, and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims or can be learned by the practice of the principles set forth herein.

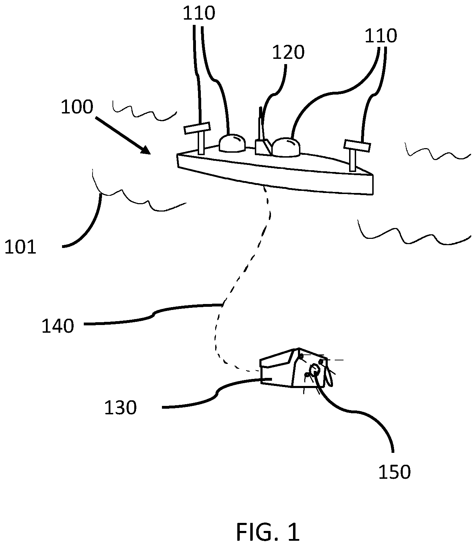

FIG. 1 shows a schematic view of two examples of UMVs. The first example is a USV 100 which operate at the sea surface 101. The USV 100 may comprise at least two sensors 110 configured to detect the surrounding environment. Acquired sensor data may include information related to nearby objects such as other vessels, buoys, floating debris, marine life, sea marks, or any other objects which can influence the navigation risk of the USV 100. The sensor data can also be weather-related such as wave height, wind speed, wind direction, visibility, precipitation, temperature, humidity, UV intensity, time, fogginess, light level, tide, and any other environmental factor that can affect the navigation of the USV 100. The USV 100 further comprises a wireless communication means 120 which can transmit and receive data when needed. The USV 100 can navigate based on processing of the sensor data acquired from the at least two sensors 110. The at least two sensors 110 can be any suitable sensor types for detecting the surrounding maritime environment, the sensor can be a radar sensor, a lidar sensor, optical sensor, sonar sensor, a weather sensor, thermal sensor, barometric pressure, humidity sensor or any other suitable sensor known in the art. A second example of a UMV is an ROV 130. The ROV 130 can be connected to a surface vessel such as the USV 100 via an umbilical 140. The umbilical 140 physically connects the USV 100 and the ROV 130 together but can also comprise a power channel and/or a communication channel such that the two UMVs can communicate electrical power signals and communication signals. Similarly, as the first example of the USV 100, the ROV 130 may comprise two or more sensors 150 which are suitable for detecting underwater environment including nearby objects, marine life, underwater installations, seabed, or any other factors which can affect the navigation of the ROV 130. The sensor data may also include water conditions.

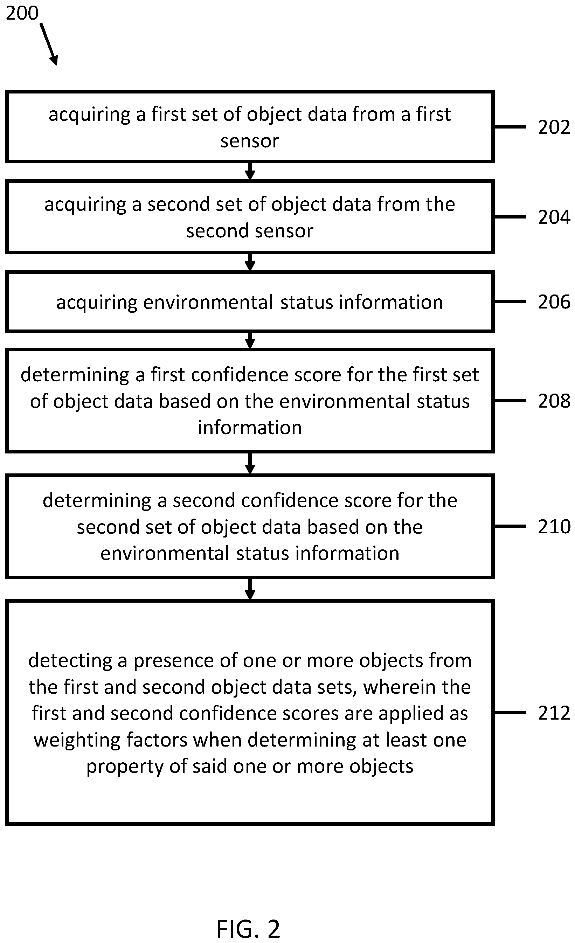

FIG. 2 shows a flow chart of a method for detecting object proximal to a UMV which can be a USV or an ROV. The UMV comprises a first sensor having a first sensing modality and a second sensor having a second sensing modality. The method assigns confidence scores to each sensor based on current environment for accurately determining properties of objects detected by the sensors. The method comprises the following steps.

Step 202 relates to acquiring a first set of object data from a first sensor. The first sensor can be any sensor known in the art suitable for detecting one or more properties/status of nearby objects. The sensor data may include object's location, movement, velocity, size, structure, colour, type, or any other property/status of the object.

Step 204 relates to acquiring a second set of object data from the second sensor. The second sensor can have a same sensing modality as the first sensor or have a different sensing modality from the first sensor. Even if the two sensors have a same modality, it does not mean that they deliver identical data. They can be located in different orientations, one sensor can be more contaminated than the other, environment around the first sensor can be different from that of the second sensor. For example, two identical optical cameras can be installed in different locations in or on the UMV, detecting a same object. While one camera is looking at the object from a bright environment, the other camera might be detecting from a darker environment, e.g. in a shade. Therefore, the images acquired from these two optical cameras may contain the same object but with different qualities which is influenced by the surrounding environment. The information related to the surrounding environment can be acquired.

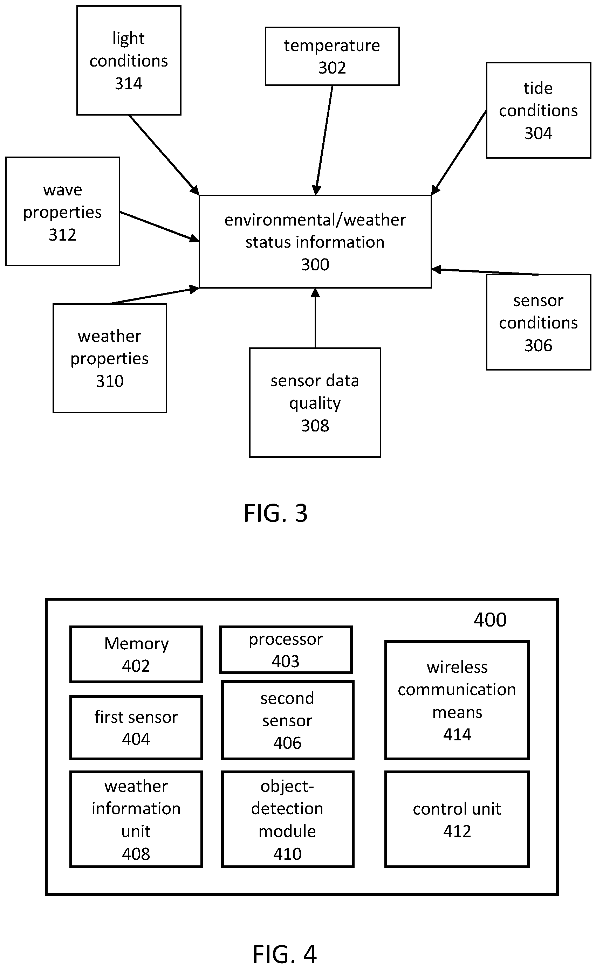

Step 206 relates to acquiring environmental status information. The environmental status information can be obtained by processing data collected from the sensors in the UMV or be obtained via a wireless communication channel from an external source such as satellite communication, remote control centre, surface drone, airborne drone, underwater drone, or other vessels. FIG. 3 shows a diagram illustrating some examples of the environmental/weather status information 300 which can include temperature 302, tide conditions 304, weather properties 310, wave properties 312, light conditions 314, and more. It can also include some parameters which can be directly influenced by the environment and are indicative of the environment, such as sensor conditions 306, and data quality 308.

Step 208 relates to determining a first confidence score for the first set of object data based on the environmental status information. Step 210 relates to determining a second confidence score for the second set of object data based on the environmental status information. Each sensing modality has its own characteristics which may perform well or not depending on the environment. For example, RGB optical cameras do not work well when the environment is dark but work well in a bright environment. In other words, the data collected in the bright environment is more trustworthy than the data collected in the dark environment in the case of RGB optical cameras. Therefore, one can evaluate the current environmental status and assign confidence scores to the sensors accordingly.

Step 212 relates to detecting a presence of one or more objects from the first and second object data sets, wherein the first and second confidence scores are applied as weighting factors when determining at least one property of said one or more objects. This step uses the difference in the reliabilities of the sensors in an object-detection process to ensure a property of an object is determined while taking into account the different levels of sensor reliability in a certain environmental condition, for example when it is raining. For example, when an optical camera and a lidar is used for detecting a same object, in a rainy environment, the data from lidar sensor may be more reliable than that from the optical camera. If the confidence scores are given in the scale of 0 to 1 (higher means more trustworthy), the confidence scores of these two sensors could be $W_{camera} = 0.6$ and $W_{lidar} = 0.9$ respectively. The assignment of confidence scores can be done for example manually, or using a lookup table, or using a scoring algorithm which can be pre-programed possibly based on a pre-trained machine learning algorithm. The determining of the confidence scores can also be further based on sensor conditions and sensor data quality which can be influenced by environment or sensor's functionality.

For example, assuming that the goal of the object-detection is to identify a surface location (x,y) of the object seen from the top of the sea surface, with respect to the location of the UMV which is assumed as the origin (0.0). If the x- and y-coordinates of the object detected by the camera and the lidar are $(x_{camera}, y_{camera}) = (10, 15)$ and $(x_{lidar}, y_{lidar}) = (12, 13)$, obtained for example by processing the images using object-detection algorithms suitable for the two imaging modalities, a fused surface location of the object can be calculated as

$$(x_{fused}, y_{fused}) = \left(\frac{(W_{camera} \cdot x_{camera} + W_{lidar} \cdot x_{lidar})}{W_{camera} + W_{lidar}} + \frac{(W_{camera} \cdot y_{camera} + W_{lidar} \cdot y_{lidar})}{W_{camera} + W_{lidar}}\right) = (11.2, \ 13.8).$$

FIG. 4 shows an example of an arrangement of a UMV 400. The UMV 400 may comprise a memory 402, a processor 403, a first sensor 404, a second sensor 406, weather information unit 408, object-detection module 410, a control unit 412, and a wireless communication means 414. The memory 402, a non-transitory computer readable medium, can be used to store sensor data and any data needed for carrying out processing of the data and navigation instructions for the UMV 400. The processing is carried out by the processor 403. The weather information unit 408 can acquire environmental status information, either from sensors of the UMV 400, or from an external source via a wireless communication channel of the wireless communication means 414. The object-detection module 410 is coupled to the sensors for processing the sensor data in order to identify objects and their properties. The object-detection module 410 may comprise various object detection algorithms, known in the art suitable for detecting objects from different sensing modalities. The control unit 412 can use the information related to the detected objects, identify any risk entailed by the objects, and maintain or adjust its course of navigation accordingly.

The invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the spirit and scope of the invention. Accordingly, although specific embodiments have been described, these are examples only and are not limiting upon the scope of the invention.

**Claims**

1.  A method for detecting objects proximal to an uncrewed marine vehicle (UMV), the UMV comprising a first sensor having a first sensing modality and a second sensor having a second sensing modality, the method comprising the steps of:

    - acquiring a first set of object data from the first sensor;
    - acquiring a second set of object data from the second sensor;
    - acquiring environmental status information;
    - determining a first confidence score for the first set of object data based on the environmental status information;
    - determining a second confidence score for the second set of object data based on the environmental status information;
    - detecting a presence of one or more objects from the first and second object data sets, wherein the first and second confidence scores are applied as weighting factors when determining at least one property of said one or more objects.

2.  The method of claim 1, wherein the method further comprises steps of:

    - acquiring one or more further sets of object data from one or more additional sensors that the UMV comprises, the one or more additional sensors having sensing modalities different to the first and second sensors;
    - determining confidence scores for each additional set of data based on the set of environmental status information; wherein the detecting of the presence of the one or more objects further comprises detecting a presence of one or more objects from the one or more additional sensor data sets and applying the additional confidence scores as weighting factors when determining at least one property of said one or more objects.

3.  The method of any of the preceding claims, wherein the determining confidence scores comprises using a lookup table correlating environmental status information to confidence scores of sensing modalities.

4. The method of any of the preceding claims, wherein determining the confidence scores comprises application of a machine learning algorithm to calculating the confidence scores.

5. The method of any of the preceding claims, wherein the method further comprises:

   - updating one or more confidence scores based on changes in weather conditions in real-time;

6. The method of claim 5, wherein the method further comprises:

   - repeating the detecting step using the updated confidence scores.

7. The method of any of the preceding claims, wherein the UMV comprises a control unit for navigation and motion control of the UMV, and wherein the method further comprises a step of:

   - providing detected object information to the control unit of the UMV, and the control unit navigating the UMV based on the detected object information.

8. The method of claim 7, wherein the method further comprises at least one of:

   - navigating the UMV to avoid collision with a detected object,
   - navigating the UMV to approach a detected object.

9. The method of any of the preceding claims, wherein the UMV is an uncrewed surface vessel, and preferably wherein the first and second sensors are arranged to sense data relating to surface obstacles and/or surface traffic.

10. The method of any of claims 1-8, wherein the UMV is an ROV, and preferably wherein the first and second sensors are arranged to sense data relating to submerged objects.

11. A non-transitory computer-readable medium storing instructions which, when executed by one or more processors, cause the one or more processors to perform operations comprising the steps of the method of any of claims 1-10.

12. An uncrewed marine vehicle (UMV) comprising:

   - a memory;
   - a first sensor having a first sensing modality configured to acquire a first set of environmental data;
   - a second sensor having a second sensing modality configured to acquire a second set of environmental data;
   - an environmental information unit configured to acquire environmental condition information;
   - a processing unit configured to:

     ◦ determine a first confidence score for the first set of data based on the weather condition information;
     ◦ determine a second confidence score for the second set of data based on the weather condition information;
     provide the first and second sets of data of the object, and the first and second confidence scores to an object-detection module, which object-detection module is configured to detect one or more objects from the first and second data sets based on the confidence scores as weighting factors for determining at least one property of the one or more objects.

13. The uncrewed marine vehicle (UMV) of claim 12, wherein the memory comprises a lookup table correlating weather condition information to confidence scores of sensing modalities.

14. The uncrewed marine vehicle (UMV) of any of claims 12-13, wherein the processing unit is further configured to update one or more confidence scores based on changes in weather conditions in real-time.

15. The uncrewed marine vehicle (UMV) of any of claims 12-14, wherein the UMV further comprise a control unit configured to navigate the UMV based on the detected object information.

FIG. 1

200

```
┌─────────────────────────────────────────┐
│   acquiring a first set of object data   │ ── 202
│        from a first sensor               │
└─────────────────────────────────────────┘
                    │
                    ▼
┌─────────────────────────────────────────┐
│  acquiring a second set of object data   │ ── 204
│        from the second sensor            │
└─────────────────────────────────────────┘
                    │
                    ▼
┌─────────────────────────────────────────┐
│   acquiring environmental status         │ ── 206
│             information                  │
└─────────────────────────────────────────┘
                    │
                    ▼
┌─────────────────────────────────────────┐
│ determining a first confidence score     │
│ for the first set of object data based   │ ── 208
│ on the environmental status information  │
└─────────────────────────────────────────┘
                    │
                    ▼
┌─────────────────────────────────────────┐
│ determining a second confidence score    │
│ for the second set of object data based  │ ── 210
│ on the environmental status information  │
└─────────────────────────────────────────┘
                    │
                    ▼
┌─────────────────────────────────────────┐
│ detecting a presence of one or more      │
│ objects from the first and second object │
│ data sets, wherein the first and second  │ ── 212
│ confidence scores are applied as         │
│ weighting factors when determining at    │
│ least one property of said one or more   │
│ objects                                  │
└─────────────────────────────────────────┘
```

FIG. 2

light
conditions
314

temperature
302

tide
conditions
304

wave
properties
312

environmental/weather
status information
300

weather
properties
310

sensor data
quality
308

sensor
conditions
306

FIG. 3

400

Memory
402

processor
403

wireless
communication
means
414

first sensor
404

second
sensor
406

weather
information
unit
408

object-
detection
module
410

control unit
412

FIG. 4

# EP 4 756 490 A1

## EUROPEAN SEARCH REPORT

**Application Number**

EP 24 21 8187

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 565 475 A (CHINA WATER RESOURCES PEARL RIVER PLANNING SURVEYING & DESIGNING CO LT) 30 August 2024 (2024-08-30) * pages 2, 6, 19 * * page 17 * ----- | 1-15 | INV. G01S13/937 G01S7/00 G01S13/86 G01S13/95 G01S17/86 |
| X | CN 118 312 920 A (HUBEI YILINENG TECH CO LTD) 9 July 2024 (2024-07-09) * pages 9,11,13 * * page 14 * ----- | 1-15 | G01S17/88 G01S17/95 G01S17/93 G01S15/93 |
| A | US 2022/221280 A1 (PANZER SAMUEL [US] ET AL) 14 July 2022 (2022-07-14) * paragraph [0014] * ----- | 3,13 | ADD. G01S15/88 G01S15/86 |

**TECHNICAL FIELDS SEARCHED (IPC)**

G01S

The present search report has been drawn up for all claims

| Place of search | Date of completion of the search | Examiner |
|---|---|---|
| Munich | 12 May 2025 | Ferrara, Michele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 8187

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2025

| Patent document cited in search report | | Publication date | Patent family member(s) | | Publication date |
|---|---|---|---|---|---|
| CN 118565475 | A | 30-08-2024 | NONE | | |
| CN 118312920 | A | 09-07-2024 | NONE | | |
| US 2022221280 | A1 | 14-07-2022 | US | 2022011116 A1 | 13-01-2022 |
| | | | US | 2022221280 A1 | 14-07-2022 |

EPO FORM P0459

For more details about this annex : see Official Journal of the European Patent Office, No. 12/82